# EUROPÄISCHE PATENTSCHRIFT

(11) **EP 3 394 844 B1**
(45) Veröffentlichungstag und Bekanntmachung des Hinweises auf die Patenterteilung: **05.01.2022**
(21) Anmeldenummer: 16794629.2
(22) Anmeldetag: 11.11.2016
(51) Int. Cl.: B60W 50/14, B60Q 9/00, G08G 1/0965, B62D 15/02, B60W 30/09, B60W 30/095, G06K 9/00, G08G 1/16

(54) **VERFAHREN ZUR KOLLISIONSVERMEIDUNG EINES KRAFTFAHRZEUGES MIT EINEM EINSATZFAHRZEUG UND EIN DIESBEZÜGLICHES SYSTEM UND KRAFTFAHRZEUG**
METHOD FOR COLLISION AVOIDANCE OF A MOTOR VEHICLE WITH AN EMERGENCY VEHICLE AND A RELATED SYSTEM AND MOTOR VEHICLE
PROCÉDÉ PERMETTANT D'ÉVITER UNE COLLISION ENTRE UN VÉHICULE AUTOMOBILE ET UN VÉHICULE D'INTERVENTION ET SYSTÈME AFFÉRENT ET VÉHICULE AUTOMOBILE AFFÉRENT

(30) Priorität: 21.12.2015 DE 102015226232
(43) Veröffentlichungstag der Anmeldung: 31.10.2018
(73) Patentinhaber: Bayerische Motoren Werke Aktiengesellschaft, 80809 München (DE)
(72) Erfinder: CONNETTE, Christian, 89129 Langenau (DE); GRÜNWEDEL, Sebastian, 89081 Ulm (DE); PITALE, Mandar, 89231 Neu-Ulm (DE); REMPIS, Christian, 49082 Osnabrück (DE); SOBOTTA, Benjamin, 89075 Ulm (DE)
(86) Internationale Anmeldenummer: PCT/EP2016/077425
(87) Internationale Veröffentlichungsnummer: WO 2017/108263

(56) Entgegenhaltungen:
- DE-A1-102010 022 165
- DE-A1-102014 200 700
- DE-B3-102012 200 950
- US-A1- 2002 154 217
- US-A1- 2004 233 067
- US-A1- 2008 150 755
- US-A1- 2014 236 414
- US-A1- 2015 161 458
- US-A1- 2015 321 698

## Beschreibung

Die vorliegende Erfindung betrifft ein Verfahren zur Kollisionsvermeidung eines Kraftfahrzeuges mit einem Einsatzfahrzeug und ein diesbezügliches System und Kraftfahrzeug.

Moderne Kraftfahrzeuge werden immer besser schallisoliert gegen ihre Umgebung. Dies trägt zu einem erhöhten Fahrkomfort bei, da Außengeräusche oftmals als störend wahrgenommen werden. Auch kann dadurch die Fahrsicherheit erhöht werden, da diese Geräusche den Fahrer auch irritieren und/oder ablenken können.

Dadurch werden jedoch Einsatzfahrzeuge im Noteinsatz möglicherweise nicht oder nicht mehr rechtzeitig wahrgenommen. Ist eine optische Wahrnehmung des Einsatzfahrzeuges nicht gegeben, so kann dies gemeinsam mit einer akustischen Nichtwahrnehmung zu gefährlichen und unfallträchtigen Situationen führen.

DE 102010022165 A1 offenbart ein akustisches Erfassen eines Fahrzeugumfelds durch eine akustische Erfassungseinheit. Ein ausgesendetes optisches Signal eines Einsatzfahrzeugs wird erfasst und klassifiziert. Ein Warnsignal mit dem erfassten akustischen Signal und/oder optischen Signal wird an einen Fahrer ausgegeben. Ein mögliches Ausweichmanöver wird in Abhängigkeit von der Umgebungserkennung und der erfassten Anfahrrichtung des Einsatzfahrzeugs für den Fahrer ausgegeben. Die akustische Erfassungseinheit ist als Richtmikrofon vorgesehen. Als Kamera ist eine optische Erfassungseinheit vorgesehen.

DE 102012200950 B3 offenbart ein Erkennen einer Sondersituation im Straßenverkehr. Dazu wird der Bereich des Umfeldes eines Fahrzeuges mittels einer Erfassungseinheit erfasst und aus den erfassten Signalen wird ermittelt, ob im Erfassungsbereich befindliche Fahrzeuge eine Rettungsgasse bilden. Dazu kann innerhalb eines Kamerabildes das Bilden einer Rettungsgasse dadurch festgestellt werden, dass sich die Fahrzeuge in Richtung der Randbereiche des aufgenommenen Bildes der Rückfahrkamera bewegen. Alternativ oder zusätzlich wird ermittelt, ob im Erfassungsbereich hinter dem Fahrzeug Sonderlichtzeichen gesetzt werden.

DE 102014200700 A1 offenbart ein Verfahren zum Erkennen einer Notspursituation. Dabei werden andere Fahrzeuge, die sich in der gleichen Richtung wie das Ego-Fahrzeug auf der Fahrspur bewegen erkannt und deren Fahrzeugpositionen werden erfasst und es wird bestimmt, ob eine Notfahrspursituation vorliegt, auf Basis ermittelter seitlicher Abstände/Versatze zwischen anderen Fahrzeugen.

Daher wäre es wünschenswert eine Möglichkeit bereitzustellen, mit der frühzeitig Einsatzfahrzeuge erkannt werden können und ein Fahrzeugnutzer entsprechend informiert werden kann.

Es ist Ziel der Erfindung eine Möglichkeit vorzuschlagen, welche zumindest einen Teil der im Stand der
Technik bekannten Nachteile vermeidet oder zumindest vermindert.

Die Aufgabe wird erfindungsgemäß gelöst, mittels eines Verfahrens gemäß dem Hauptanspruch, sowie mittels eines Systems gemäß einem nebengeordneten Anspruch.

Der Gegenstand des Hauptanspruches betrifft dabei ein Verfahren zur Kollisionsvermeidung eines Kraftfahrzeuges mit einem Einsatzfahrzeug, das Verfahren aufweisend: Optisches erfassen einer Umgebung des Kraftfahrzeuges mittels einer optischen Erfassungsvorrichtung des Kraftfahrzeuges. Akustisches erfassen einer weiteren Umgebung des Kraftfahrzeuges mittels einer akustischen Erfassungsvorrichtung des Kraftfahrzeuges, wobei die weitere Umgebung die Umgebung aufweist und räumlich in ihrer Ausdehnung über eine räumliche Ausdehnung der Umgebung hinausgeht . Ermitteln von Verkehrsteilnehmern der Umgebung. Untersuchen der weiteren Umgebung auf ein Signal, wobei das Signal indikativ ist, für ein Einsatzsignal eines Einsatzfahrzeuges. Ermitteln einer Bewegungstrajektorie für jeden ermittelten Verkehrsteilnehmer. Und falls das Untersuchen der weiteren Umgebung ein entsprechendes Einsatzsignal ermittelt: Untersuchen der ermittelten Bewegungstrajektorien auf ein Schwarmverhalten, wobei das Schwarmverhalten indikativ ist, für eine Gefahrsituation in der Umgebung. Und falls das Untersuchen der ermittelten Bewegungstrajektorien eine entsprechende Gefahrsituation in der Umgebung ermittelt: Lokalisieren eines Aufenthaltsortes des Einsatzfahrzeuges. Ermitteln einer Bewegungstrajektorie für das Einsatzfahrzeug, basierend auf dem lokalisierten Aufenthaltsort des Einsatzfahrzeuges und den ermittelten Bewegungstrajektorien der Verkehrsteilnehmer. Antizipieren, ob für eine aktuelle Bewegungstrajektorie des Kraftfahrzeuges, basierend auf der ermittelten Bewegungstrajektorie für das Einsatzfahrzeug, eine Kollision des Kraftfahrzeuges mit dem Einsatzfahrzeug eintreten wird. Und falls das Antizipieren ergibt, dass die Kollision eintreten wird: Ausgeben eines entsprechenden Warnhinweises an einen Nutzer des Kraftfahrzeuges.

Die Verfahrensschritte können dabei automatisiert ausgeführt werden.

Eine Umgebung des Kraftfahrzeuges im Sinne der Erfindung kann dabei einen Bereich um das Kraftfahrzeug meinen. Insbesondere kann dabei ein Bereich um das Kraftfahrzeug gemeint sein, der mittels einer optischen Erfassungsvorrichtung erfassbar ist. Dabei kann der von der optischen Erfassungsvorrichtung erfassbare Bereich um das Kraftfahrzeug gemeint sein, der derart deutlich auflösbar ist, dass eine Objekterkennung noch möglich ist.

Eine optische Erfassungsvorrichtung im Sinne der Erfindung kann dabei eine Vorrichtung meinen, die eine visuelle Umgebungserkennung ermöglicht. Dies kann mittels optischer Mittel erfolgen, jedoch auch mittels Infrarot oder auch einem Scanning, wie beispielsweise mittels Radar und/oder Lidar und dergleichen.

Mit einer weiteren Umgebung des Kraftfahrzeuges wird im Sinne der Erfindung einen zweiten Bereich um das Kraftfahrzeug gemeint, der mittels einer akustischen Erfassungsvorrichtung erfassbar ist. Daher ist gemäß der Erfindung die weitere Umgebung weiträumiger, als die Umgebung selbst.

Eine akustische Erfassungsvorrichtung im Sinne der Erfindung, kann dabei eine Vorrichtung sein, welche dazu eingerichtet ist akustische Signale zu detektieren. Insbesondere kann dabei eine Vorrichtung gemeint sein, welches dazu eingerichtet ist, akustische Signale zu detektieren, wie sie von Einsatzfahrzeugen, wie Polizei, Feuerwehr, Notarzt und dergleichen, während eines entsprechenden Noteinsatzes ausgesendet werden. Solch eine akustische Erfassungsvorrichtung kann dabei auch akustische Signale wahrnehmen, wie sie von sogenannten ,Rumblern' von Einsatzfahrzeugen emittiert werden. Diese Signale sind in der Regel für das menschliche Gehör nicht als Ton wahrnehmbar, sondern werden vom Menschen als Vibration wahrgenommen.

Ein Verkehrsteilnehmer der Umgebung im Sinne der Erfindung, kann dabei einen Teilnehmer im Straßenverkehr meinen. Insbesondere können dabei potentiell schnelle Straßenverkehrsteilnehmer, wie Kraftfahrzeuge, gemeint sein. Es können jedoch auch Passanten, Radfahrer und dergleichen gemeint sein.

Ein Signal im Sinne der Erfindung kann dabei eine akustische Schallwelle meinen. Insbesondere kann das Signal ein akustische Warnung meinen, wie sie von Einsatzfahrzeugen, wie Polizei, Feuerwehr, Notarzt und dergleichen, während eines entsprechenden Noteinsatzes ausgesendet werden.

Eine Bewegungstrajektorie im Sinne der Erfindung kann dabei ein virtueller Pfad sein, welcher indikativ für die von einem Kraftfahrzeug zurückzulegende Strecke sein kann. Insbesondere kann eine Bewegungstrajektorie bestimmen, welchen Pfad ein Kraftfahrzeug nehmen soll. Dies kann insbesondere durch eine Vielzahl an Trajektorien erreicht werden, die aneinandergelegt werden können.

Ein Schwarmverhalten im Sinne der Erfindung, kann dabei meinen, dass viele Objekte sich ähnlich verhalten, ähnlich einem Fischschwarm oder einem Vogelschwarm. Insbesondere kann dabei gemeint sein, dass zumindest nahe beieinander oder entlang einer Bewegungsrichtung befindliche Objekte ein sehr ähnliches beziehungsweise konsistentes Bewegungsverhalten aufweisen.

Ein Antizipieren im Sinne der Erfindung meint dabei eine Vorausschau, aufgrund einer bisherigen Information beziehungsweise Verhaltens. Dabei kann das Antizipieren aufgrund einer logisch oder auch logisch stringenten Informationskette an bisher beobachteten Ereignissen erfolgen.

Ein Warnhinweis im Sinne der Erfindung meint dabei einen Hinweis, der aufgrund einer anstehenden Gefahr erfolgt. Solch ein Warnhinweis kann einen akustischen, visuellen und/oder haptischen Hinweis aufweisen. Ein Warnhinweis kann darüber hinaus auch eine Verhaltensinformation aufweisen, wie auf die anstehende Gefahr adäquat reagiert werden kann.

Durch die erfindungsgemäße Lehre wird der Vorteil erreicht, dass eine anstehende Gefahrsituation aufgrund eines Noteinsatzes eines Einsatzfahrzeuges identifiziert werden kann und ein Fahrzeugnutzer entsprechend vorgewarnt werden kann.

Dadurch können Unfälle in solchen Situationen vermieden werden.

Der Gegenstand eines nebengeordneten Anspruches betrifft dabei ein System zur Kollisionsvermeidung eines Kraftfahrzeuges mit einem Einsatzfahrzeug, wobei das Kraftfahrzeug aufweist: Eine optische Erfassungsvorrichtung, zum optischen Erfassen einer Umgebung des Kraftfahrzeuges. Eine akustische Erfassungsvorrichtung, zum akustischen Erfassen einer weiteren Umgebung des Kraftfahrzeuges, wobei die weitere Umgebung die Umgebung aufweist. Und eine Ausgabevorrichtung, zum Ausgeben eines Warnhinweises an einen Nutzer des Kraftfahrzeuges. Das System weist dabei auf: Ein erstes Ermittlungsmittel zum Ermitteln von Verkehrsteilnehmern der Umgebung. Ein Untersuchungsmittel, zum Untersuchen der weiteren Umgebung auf ein Signal, wobei das Signal indikativ ist, für ein Einsatzsignal eines Einsatzfahrzeuges. Ein zweites Ermittlungsmittel, zum Ermitteln einer Bewegungstrajektorie für jeden ermittelten Verkehrsteilnehmer. Ein weiteres Untersuchungsmittel, zum Untersuchen der ermittelten Bewegungstrajektorien auf ein Schwarmverhalten, wobei das Schwarmverhalten indikativ ist, für eine Gefahrsituation in der Umgebung. Ein Lokalisierungsmittel, zum Lokalisieren eines Aufenthaltsortes des Einsatzfahrzeuges. Ein drittes Ermittlungsmittel, zum Ermitteln einer Bewegungstrajektorie für das Einsatzfahrzeug, basierend auf dem lokalisierten Aufenthaltsort des Einsatzfahrzeuges und den ermittelten Bewegungstrajektorien der Verkehrsteilnehmer. Und ein Antizipierungsmittel, zum Antizipieren, ob für eine aktuelle Bewegungstrajektorie des Kraftfahrzeuges, basierend auf der ermittelten Bewegungstrajektorie für das Einsatzfahrzeug, eine Kollision des Kraftfahrzeuges mit dem Einsatzfahrzeug eintreten wird. Und dabei ist das System dazu eingerichtet, irgendein erfindungsgemäßes Verfahren auszuführen.

Durch die erfindungsgemäße Lehre wird der Vorteil erreicht, dass ein System bereitgestellt werden kann, um eine anstehende Gefahrsituation aufgrund eines Noteinsatzes eines Einsatzfahrzeuges identifizieren zu können und einen Fahrzeugnutzer entsprechend vorwarnen zu können.

Der Gegenstand eines weiteren nebengeordneten Anspruches betrifft dabei ein Kraftfahrzeug, aufweisend: Eine optische Erfassungsvorrichtung, zum optischen Erfassen einer Umgebung des Kraftfahrzeuges. Eine akustische Erfassungsvorrichtung, zum akustischen Erfassen einer weiteren Umgebung des Kraftfahrzeuges, wobei die weitere Umgebung die Umgebung aufweist. Eine Ausgabevorrichtung, zum Ausgeben eines Warnhinweises an einen Nutzer des Kraftfahrzeuge. Und irgendein erfindungsgemäßes System, wobei das System dazu eingerichtet ist, irgendein erfindungsgemäßes Verfahren auszuführen.

Durch die erfindungsgemäße Lehre wird der Vorteil erreicht, dass in einem Kraftfahrzeug eine anstehende Gefahrsituation aufgrund eines Noteinsatzes eines Einsatzfahrzeuges identifiziert werden kann und ein Fahrzeugnutzer des Kraftfahrzeuges entsprechend vorgewarnt werden kann.

Dadurch kann ein Schaden an dem Kraftfahrzeug und auch eine Verletzung der Fahrzeuginsassen in solch einer Ausnahmesituation vermieden werden.

Der Gegenstand eines weiteren nebengeordneten Anspruches betrifft dabei ein Computerprogrammprodukt für ein System und/oder ein Kraftfahrzeug, wobei das System und/oder Kraftfahrzeug nach irgendeinem erfindungsgemäßen Verfahren betreibbar ist.

Durch die erfindungsgemäße Lehre wird der Vorteil erreicht, dass das Verfahren besonders effizient automatisiert ausgeführt werden kann.

Der Gegenstand eines weiteren nebengeordneten Anspruches betrifft dabei einen Datenträger aufweisend ein erfindungsgemäßes Computerprogrammprodukt.

Durch die erfindungsgemäße Lehre wird der Vorteil erreicht, dass das Verfahren besonders effizient auf die das Verfahren ausführenden Vorrichtungen, Systeme und/oder Kraftfahrzeuge verteilt beziehungsweise vorgehalten werden kann.

Bevor nachfolgend Ausgestaltungen der Erfindung eingehender beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit in der Beschreibung und den Ansprüchen der Singular verwendet wird ist dabei jeweils der Plural mit umfasst, soweit der Kontext dies nicht explizit ausschließt. Etwaige Verfahrensschritte können, soweit der Kontext dies nicht explizit ausschließt, automatisiert ausgeführt werden.

Nachfolgend werden weitere exemplarische Ausgestaltungen des erfindungsgemäßen Verfahrens erläutert.

Entsprechend einer ersten exemplarischen Ausgestaltung weist das Verfahren ferner auf, dass die jeweils ermittelte entsprechende Bewegungstrajektorie für den jeweils entsprechenden Verkehrsteilnehmer der jeweils entsprechenden wahrscheinlichsten Bewegungstrajektorie für diesen entsprechenden Verkehrsteilnehmer entspricht.

Diese Ausgestaltung weist den Vorteil auf, dass auf das am wahrscheinlichsten eintretende Ereignis reagiert werden kann. Durch ein zyklisches Durchlaufen des Verfahrens kann sich das Verfahren dadurch an das tatsächlich in der Zukunft eintretende Ereignis annähern und so wesentlich zuverlässiger Vorhersagen, ob eine Kollisionsgefahr besteht.

Entsprechend einer weiteren exemplarischen Ausgestaltung weist das Verfahren ferner auf, dass der lokalisierte Aufenthaltsort des Einsatzfahrzeuges dem wahrscheinlichsten Aufenthaltsort des Einsatzfahrzeuges entspricht. Und ferner weist das Verfahren auf, dass die ermittelte Bewegungstrajektorie für das Einsatzfahrzeug der wahrscheinlichsten Bewegungstrajektorie des Einsatzfahrzeuges entspricht.

Diese Ausgestaltung weist den Vorteil auf, dass auf das am wahrscheinlichsten eintretende Ereignis noch akkurater reagiert werden kann. Durch ein zyklisches Durchlaufen des Verfahrens kann sich das Verfahren dadurch noch besser an das tatsächlich in der Zukunft eintretende Ereignis annähern und so noch wesentlich zuverlässiger Vorhersagen, ob eine Kollisionsgefahr besteht.

Entsprechend einer weiteren exemplarischen Ausgestaltung weist das Verfahren ferner für den Fall, dass das Antizipieren ergibt, dass die Kollision eintreten wird, ein Ermitteln einer kollisionsfreien Bewegungstrajektorie des Kraftfahrzeuges auf.

Diese Ausgestaltung weist den Vorteil auf, dass im Falle einer Kollisionsvorhersage eine Ausweichmöglichkeit bestimmt werden kann, die dem Fahrzeugnutzer als Handlungsanweisung angegeben werden kann.

Dadurch können Unfälle in solchen Ausnahmesituationen noch besser vermieden werden.

Entsprechend einer weiteren exemplarischen Ausgestaltung weist das Verfahren ferner auf, dass das Kraftfahrzeug ein hochautomatisiert betreibbares Kraftfahrzeug und/oder ein autonom betreibbares Kraftfahrzeug ist.

Diese Ausgestaltung weist den Vorteil auf, dass das Verfahren an eine Fahrerassistenz beziehungsweise an ein autonomes Fahrsystem ankoppelbar ist, um selbständig ein entsprechendes Ausweichen des Kraftfahrzeuges im Falle einer Kollisionsvorhersage vornehmen zu können.

Entsprechend einer weiteren exemplarischen Ausgestaltung weist das Verfahren ferner auf, dass die Umgebung entlang der aktuellen Bewegungstrajektorie des Kraftfahrzeuges verläuft. Und dabei weist die weitere Umgebung eine Fläche auf, welche sich von einer Fläche der Umgebung unterscheidet, und/oder wobei die Fläche der weiteren Umgebung größer ist, als die Fläche der Umgebung.

Diese Ausgestaltung weist den Vorteil auf, dass eine noch frühzeitigere Gefahrerkennung möglich wird.

Entsprechend einer ersten exemplarischen Ausgestaltung weist das System ferner auf: Ein viertes Ermittlungsmittel, zum Ermitteln einer kollisionsfreien Bewegungstrajektorie des Kraftfahrzeuges. Und eine Kollisionsausweichvorrichtung, zum automatischen Übernehmen und Umsetzen der kollisionsfreien Bewegungstrajektorie durch das Kraftfahrzeug.

Diese Ausgestaltung weist den Vorteil auf, dass das Kraftfahrzeug dadurch befähigt werden kann, selbständig ein entsprechendes Ausweichen des Kraftfahrzeuges im Falle einer Kollisionsvorhersage vornehmen zu können.

Die Erfindung erlaubt es somit, eine wahrscheinlich auftretende Gefahrsituation aufgrund einer Ausnahmesituation, wie sie durch einen Noteinsatz eines Kraftfahrzeuges im Straßenverkehr entstehen kann, vorherzusagen und davor entsprechend zu warnen.

Die Erfindung wird nachfolgend eingehender an Hand der Figuren erläutert werden. In diesen zeigen:
Fig. 1 eine schematische Darstellung eines vorgeschlagenen Verfahrens gemäß einer beispielhaften Ausgestaltung der Erfindung;
Fig. 2 eine schematische Darstellung eines vorgeschlagenen Verfahrens gemäß einer weiteren beispielhaften Ausgestaltung der Erfindung;
Fig. 3 eine schematische Darstellung eines vorgeschlagenen Verfahrens gemäß einer weiteren beispielhaften Ausgestaltung der Erfindung;
Fig. 4 eine schematische Darstellung eines vorgeschlagenen Systems gemäß einer weiteren beispielhaften Ausgestaltung der Erfindung;
Fig. 5 eine schematische Darstellung eines vorgeschlagenen Systems gemäß einer weiteren beispielhaften Ausgestaltung der Erfindung; und
Fig. 6 eine schematische Darstellung eines vorgeschlagenen Kraftfahrzeuges gemäß einer weiteren beispielhaften Ausgestaltung der Erfindung.

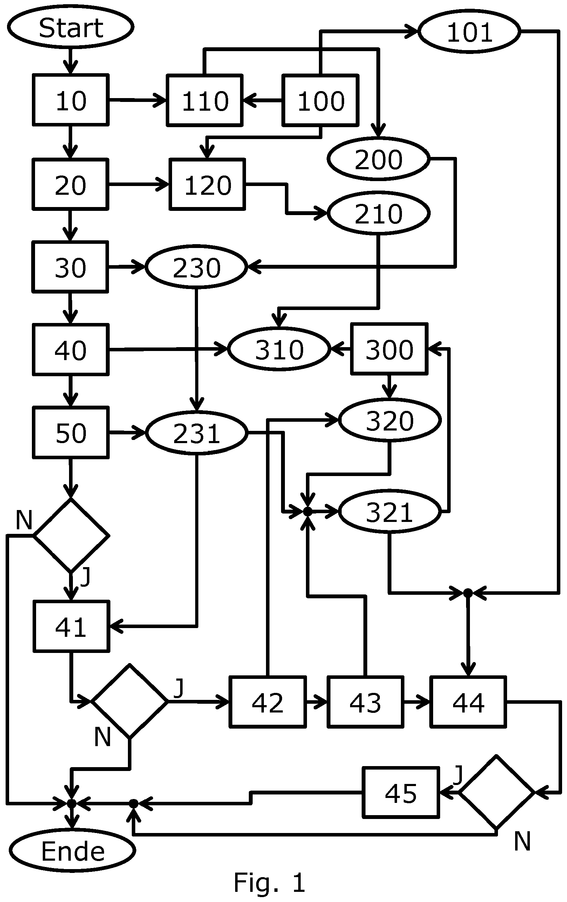

Fig. 1 zeigt eine schematische Darstellung eines vorgeschlagenen Verfahrens gemäß einer beispielhaften Ausgestaltung der Erfindung.

Dabei zeigt Fig. 1 eine schematische Darstellung eines Verfahrens zur Kollisionsvermeidung eines Kraftfahrzeuges 100 mit einem Einsatzfahrzeug 300. Das Verfahren weist dabei auf: Optisches erfassen 10 einer Umgebung 200 des Kraftfahrzeuges 100 mittels einer optischen Erfassungsvorrichtung 110 des Kraftfahrzeuges 100. Akustisches erfassen 20 einer weiteren Umgebung 210 des Kraftfahrzeuges 100 mittels einer akustischen Erfassungsvorrichtung 120 des Kraftfahrzeuges 100, wobei die weitere Umgebung 210 die Umgebung 200 aufweist. Ermitteln 30 von Verkehrsteilnehmern 230 der Umgebung 200. Untersuchen 40 der weiteren Umgebung 210 auf ein Signal 310, wobei das Signal 310 indikativ ist, für ein Einsatzsignal eines Einsatzfahrzeuges 300. Ermitteln 50 einer Bewegungstrajektorie 231 für jeden ermittelten Verkehrsteilnehmer 230. Und falls das Untersuchen 40 der weiteren Umgebung 210 ein entsprechendes Einsatzsignal ermittelt: Untersuchen 41 der ermittelten Bewegungstrajektorien 231 auf ein Schwarmverhalten, wobei das Schwarmverhalten indikativ ist, für eine Gefahrsituation in der Umgebung 200. Und falls das Untersuchen 41 der ermittelten Bewegungstrajektorien 231 eine entsprechende Gefahrsituation in der Umgebung 200 ermittelt: Lokalisieren 42 eines Aufenthaltsortes 320 des Einsatzfahrzeuges 300. Ermitteln 43 einer Bewegungstrajektorie 321 für das Einsatzfahrzeug 300, basierend auf dem lokalisierten Aufenthaltsort 320 des Einsatzfahrzeuges 300 und den ermittelten Bewegungstrajektorien 231 der Verkehrsteilnehmer 230. Antizipieren 44, ob für eine aktuelle Bewegungstrajektorie 101 des Kraftfahrzeuges 100, basierend auf der ermittelten Bewegungstrajektorie 321 für das Einsatzfahrzeug 300, eine Kollision des Kraftfahrzeuges 100 mit dem Einsatzfahrzeug 300 eintreten wird. Und falls das Antizipieren 44 ergibt, dass die Kollision eintreten wird: Ausgeben 45 eines entsprechenden Warnhinweises an einen Nutzer des Kraftfahrzeuges 100.

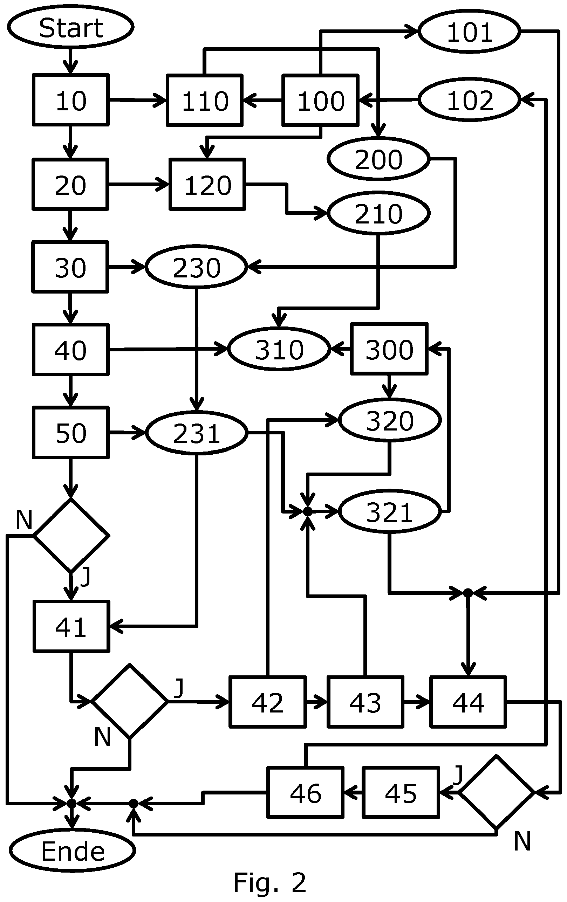

Fig. 2 zeigt eine schematische Darstellung eines vorgeschlagenen Verfahrens gemäß einer weiteren beispielhaften Ausgestaltung der Erfindung.

Dabei zeigt Fig. 2 eine schematische Darstellung eines bezüglich der Fig. 1 weiterentwickelten Verfahrens. Das zuvor für Fig. 1 Gesagte, gilt daher auch für Fig. 2 fort.

Fig. 2 zeigt das Verfahren aus Fig. 1, wobei das Verfahren ferner aufweist: Ermitteln 46 einer kollisionsfreien Bewegungstrajektorie 102 des Kraftfahrzeuges 100, in dem Fall, dass das Antizipieren 44 ergibt, dass die Kollision eintreten wird.

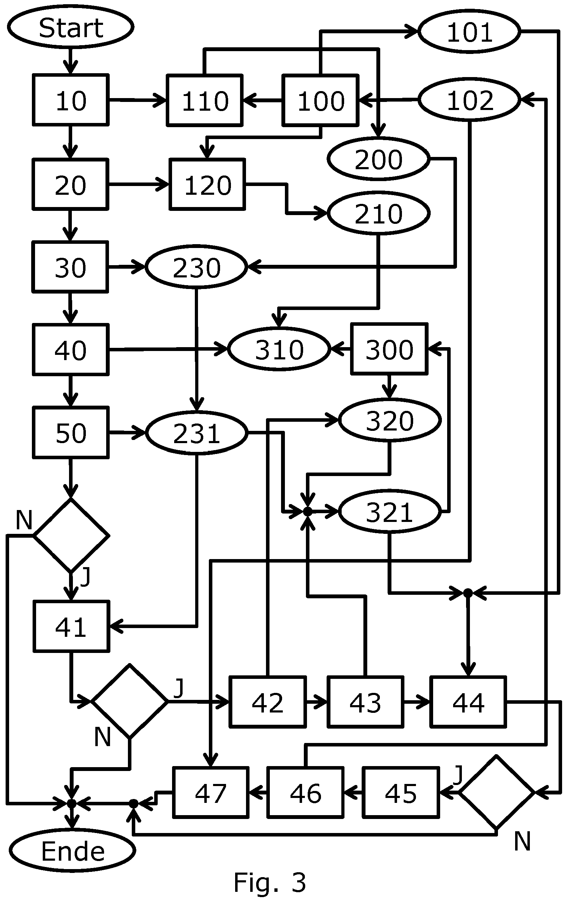

Fig. 3 zeigt eine schematische Darstellung eines vorgeschlagenen Verfahrens gemäß einer weiteren beispielhaften Ausgestaltung der Erfindung.

Dabei zeigt Fig. 3 eine schematische Darstellung eines bezüglich der Fig. 1 und Fig. 2 weiterentwickelten Verfahrens. Das zuvor für Fig. 1 und Fig. 2 Gesagte, gilt daher auch für Fig. 3 fort.

Fig. 3 zeigt das Verfahren aus Fig. 1, wobei das Verfahren ferner aufweist: Automatisches Übernehmen und Umsetzen 47 der kollisionsfreien Bewegungstrajektorie 102 durch das Kraftfahrzeug 100.

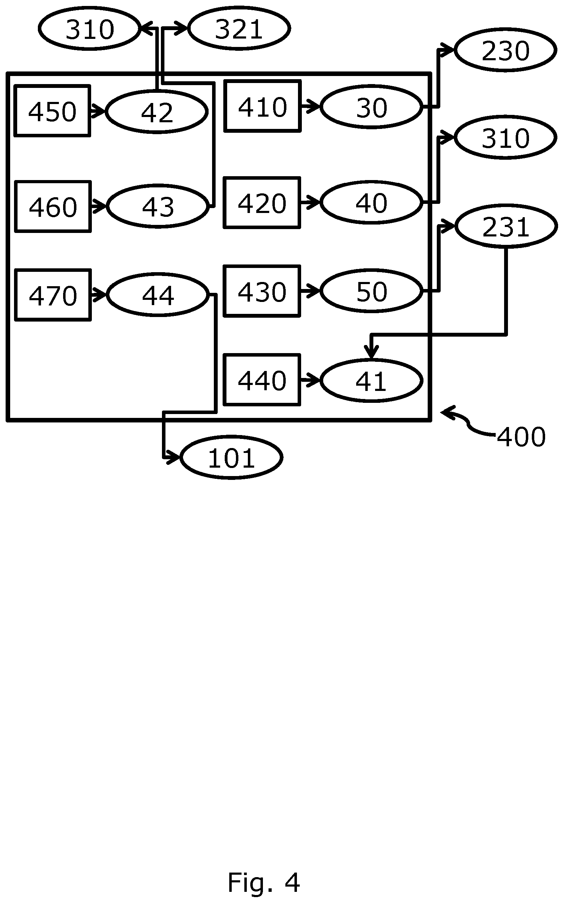

Fig. 4 zeigt eine schematische Darstellung eines vorgeschlagenen Systems gemäß einer weiteren beispielhaften Ausgestaltung der Erfindung.

Dabei zeigt Fig. 4 eine schematische Darstellung eines vorgeschlagenen Systems 400 zur Kollisionsvermeidung eines Kraftfahrzeuges 100 mit einem Einsatzfahrzeug 300. Dabei weist das Kraftfahrzeug 100 auf: Eine optische Erfassungsvorrichtung 110, zum optischen Erfassen 10 einer Umgebung 200 des Kraftfahrzeuges 100. Eine akustische Erfassungsvorrichtung 120, zum akustischen Erfassen 20 einer weiteren Umgebung 210 des Kraftfahrzeuges 100, wobei die weitere Umgebung 210 die Umgebung 200 aufweist. Und eine Ausgabevorrichtung 130, zum Ausgeben 45 eines Warnhinweises an einen Nutzer des Kraftfahrzeuges 100. Und dabei weist das System 400 auf: Ein erstes Ermittlungsmittel 410 zum Ermitteln 30 von Verkehrsteilnehmern 230 der Umgebung 200. Ein Untersuchungsmittel 420, zum Untersuchen 40 der weiteren Umgebung 210 auf ein Signal 310, wobei das Signal 310 indikativ ist, für ein Einsatzsignal eines Einsatzfahrzeuges 300. Ein zweites Ermittlungsmittel 430, zum Ermitteln 50 einer Bewegungstrajektorie 231 für jeden ermittelten Verkehrsteilnehmer 230. Ein weiteres Untersuchungsmittel 440, zum Untersuchen 41 der ermittelten Bewegungstrajektorien 231 auf ein Schwarmverhalten, wobei das Schwarmverhalten indikativ ist, für eine Gefahrsituation in der Umgebung 200. Ein Lokalisierungsmittel 450, zum Lokalisieren eines Aufenthaltsortes 320 des Einsatzfahrzeuges 300. Ein drittes Ermittlungsmittel 460, zum Ermitteln 43 einer Bewegungstrajektorie 321 für das Einsatzfahrzeug 300, basierend auf dem lokalisierten Aufenthaltsort 320 des Einsatzfahrzeuges 300 und den ermittelten Bewegungstrajektorien 231 der Verkehrsteilnehmer 230. Und ein Antizipierungsmittel 470, zum Antizipieren 44, ob für eine aktuelle Bewegungstrajektorie 101 des Kraftfahrzeuges 100, basierend auf der ermittelten Bewegungstrajektorie 321 für das Einsatzfahrzeug 300, eine Kollision des Kraftfahrzeuges 100 mit dem Einsatzfahrzeug 300 eintreten wird. Und dabei ist das System 250 dazu eingerichtet, irgendein erfindungsgemäßes Verfahren auszuführen.

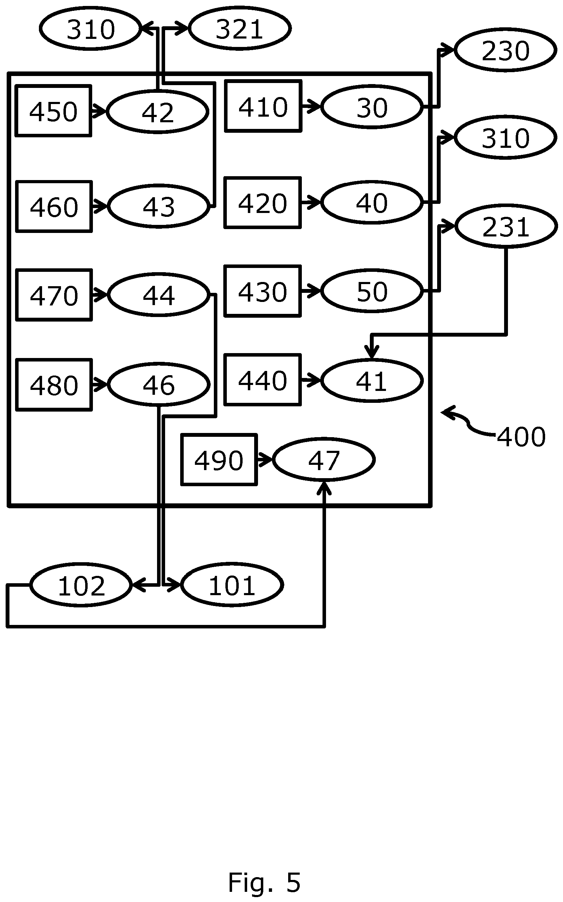

Fig. 5 zeigt eine schematische Darstellung eines vorgeschlagenen Systems gemäß einer weiteren beispielhaften Ausgestaltung der Erfindung.

Dabei zeigt Fig. 5 eine schematische Darstellung eines bezüglich der Fig. 4 weiterentwickelten Systems. Das zuvor für Fig. 4 Gesagte, gilt daher auch für Fig. 5 fort.

Wie Fig. 5 entnommen werden kann, weist das System 400 ferner auf: Ein viertes Ermittlungsmittel 480, zum Ermitteln 46 einer kollisionsfreien Bewegungstrajektorie 102 des Kraftfahrzeuges 100. Und eine Kollisionsausweichvorrichtung 490, zum automatischen Übernehmen und Umsetzen 47 der kollisionsfreien Bewegungstrajektorie 102 durch das Kraftfahrzeug 100.

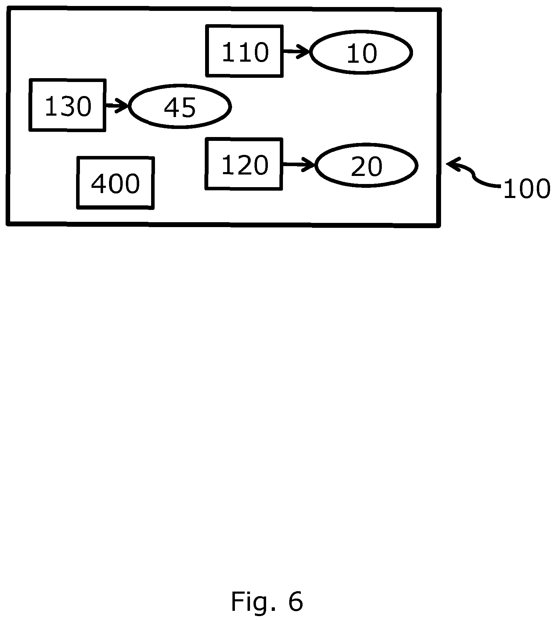

Fig. 6 zeigt eine schematische Darstellung eines vorgeschlagenen Kraftfahrzeuges gemäß einer weiteren beispielhaften Ausgestaltung der Erfindung.

Dabei zeigt Fig. 6 eine schematische Darstellung eines Kraftfahrzeuges 100, aufweisend: Eine optische Erfassungsvorrichtung 110, zum optischen Erfassen 10 einer Umgebung 200 des Kraftfahrzeuges 100. Eine akustische Erfassungsvorrichtung 120, zum akustischen Erfassen 20 einer weiteren Umgebung 210 des Kraftfahrzeuges 100, wobei die weitere Umgebung 210 die Umgebung 200 aufweist. Eine Ausgabevorrichtung 130, zum Ausgeben eines Warnhinweises an einen Nutzer des Kraftfahrzeuges 100. Und irgendein erfindungsgemäßes System 400, wobei das System 400 dazu eingerichtet ist, irgendein erfindungsgemäßes Verfahren auszuführen.

Die Erfindungsidee kann wie folgt zusammengefasst werden. Es werden ein Verfahren, ein diesbezügliches System und ein Kraftfahrzeug bereitgestellt, wodurch es möglich werden kann, dass Kollisionen mit Einsatzfahrzeugen im Falle eines Noteinsatzes eines solchen Einsatzfahrzeuges vorhergesagt werden können und ein Fahrzeugnutzer frühzeitig darauf hingewiesen werden kann. Die Vorhersage kann dabei Wahrscheinlichkeitsbehaftet erfolgen. Zunächst wird dabei das Einsatzfahrzeug detektiert und dessen Aufenthaltsort geortet. Ferner wird die Fahrzeugumgebung auf ein Schwarmverhalten der weiteren Verkehrsteilnehmer hin untersucht. Es wird dabei davon ausgegangen, dass falls ein Schwarmverhalten vorliegt, welches auf eine Gefahrsituation hinweist und ein Signal detektiert wird, welches dem eines Notsignales beziehungsweise Einsatzsignales eines Einsatzfahrzeuges entspricht, ein Noteinsatz eines Einsatzfahrzeuges tatsächlich vorliegt. Anschließend wird eine Fahrbewegung des georteten Einsatzfahrzeuges vorhergesagt. Darauf basierend wird eine Kollisionsvorhersage getroffen. Ergibt diese Vorhersage, dass eine Kollision des Kraftfahrzeuges mit dem Einsatzfahrzeug vorliegt, wird eine Kollisionswarnung ausgegeben.

Durch ein zyklisches Wiederholen des Verfahrens kann dabei die Aussagekraft der Vorhersage entsprechend gesteigert werden, je näher das Kraftfahrzeug und das Einsatzfahrzeug sich kommen. Ferner kann auch eine Ausweichmöglichkeit ermittelt werden, um einer vorhergesagten Kollision ausweichen zu können. Das Ausweichen kann dabei auf einer Autobahn derart erfolgen, dass es der Bildung einer Rettungsgasse entspricht. Ferner kann das Ausweichen auch selbstständig erfolgen, so dass das Kraftfahrzeug der vorhergesagten Kollision selbst ausweichen kann, ohne dass ein Fahrer das Ausweichen vornehmen muss.

Das Ausweichen kann dabei auch erfolgen, indem einem dahinter fahrenden Einsatzfahrzeug der Weg für eine Weiterfahrt freigemacht wird, indem eine entsprechende kollisionsfreie Ausweichtrajektorie bestimmt wird, welche dann gefahren werden kann. Auch kann eine kollisionsfreie Ausweichtrajektorie ein Anhalten des Kraftfahrzeuges aufweisen, um eine Kollision mit einem Einsatzfahrzeug zu verhindern.

### Bezugszeichenliste

- 10: optisches erfassen der Umgebung des Kraftfahrzeuges
- 20: akustisches erfassen der weiteren Umgebung des Kraftfahrzeuges
- 30: ermitteln von Verkehrsteilnehmern der Umgebung
- 40: untersuchen der weiteren Umgebung auf ein Signal
- 41: untersuchen der ermittelten Bewegungstrajektorien auf ein Schwarmverhalten
- 42: lokalisieren des Aufenthaltsortes des Einsatzfahrzeuges
- 43: ermitteln einer Bewegungstrajektorie für das Einsatzfahrzeug
- 44: antizipieren, ob eine Kollision des Kraftfahrzeuges mit dem Einsatzfahrzeug eintreten wird
- 45: Ausgeben eines Warnhinweises
- 46: Ermitteln einer kollisionsfreien Bewegungstrajektorie des Kraftfahrzeuges
- 47: automatisches Übernehmen und Umsetzen der kollisionsfreien Bewegungstrajektorie
- 50: ermitteln einer Bewegungstrajektorie für jeden ermittelten Verkehrsteilnehmer
- 100: Kraftfahrzeug
- 101: aktuelle Bewegungstrajektorie des Kraftfahrzeuges
- 102: kollisionsfreie Bewegungstrajektorie des Kraftfahrzeuges
- 110: optische Erfassungsvorrichtung
- 120: akustische Erfassungsvorrichtung
- 130: Ausgabevorrichtung
- 200: Umgebung des Kraftfahrzeuges
- 210: weitere Umgebung des Kraftfahrzeuges
- 230: Verkehrsteilnehmer der Umgebung
- 231: Bewegungstrajektorie des Verkehrsteilnehmers
- 300: Einsatzfahrzeug
- 310: Signal
- 320: Aufenthaltsort des Einsatzfahrzeuges
- 321: Bewegungstrajektorie für das Einsatzfahrzeug
- 400: System zur Kollisionsvermeidung des Kraftfahrzeuges mit dem Einsatzfahrzeug
- 410: erstes Ermittlungsmittel
- 420: Untersuchungsmittel
- 430: zweites Ermittlungsmittel
- 440: weiteres Untersuchungsmittel
- 450: Lokalisierungsmittel
- 460: drittes Ermittlungsmittel
- 470: Antizipierungsmittel
- 480: viertes Ermittlungsmittel
- 490: Kollisionsausweichvorrichtung

## Patentansprüche

1. Ein Verfahren zur Kollisionsvermeidung eines Kraftfahrzeuges (100) mit einem Einsatzfahrzeug (300), das Verfahren aufweisend:
- Optisches erfassen (10) einer Umgebung (200) des Kraftfahrzeuges (100) mittels einer optischen Erfassungsvorrichtung (110) des Kraftfahrzeuges (100),
- akustisches erfassen (20) einer weiteren Umgebung (210) des Kraftfahrzeuges (100) mittels einer akustischen Erfassungsvorrichtung (120) des Kraftfahrzeuges (100), wobei die weitere Umgebung (210) die Umgebung (200) aufweist und räumlich in ihrer Ausdehnung über eine räumliche Ausdehnung der Umgebung (200) hinausgeht,
- ermitteln (30) von Verkehrsteilnehmern (230) der Umgebung (200),
- untersuchen (40) der weiteren Umgebung (210) auf ein Signal (310), wobei das Signal (310) indikativ ist, für ein Einsatzsignal eines Einsatzfahrzeuges (300),
- ermitteln (50) einer Bewegungstrajektorie (231) für jeden ermittelten Verkehrsteilnehmer (230), und
- falls das Untersuchen (40) der weiteren Umgebung (210) ein entsprechendes Einsatzsignal ermittelt:
- Untersuchen (41) der ermittelten Bewegungstrajektorien (231) auf ein Schwarmverhalten, wobei das Schwarmverhalten indikativ ist, für eine Gefahrsituation in der Umgebung (200), und
- falls das Untersuchen (41) der ermittelten Bewegungstrajektorien (231) eine entsprechende Gefahrsituation in der Umgebung (200) ermittelt:
- Lokalisieren (42) eines Aufenthaltsortes (320) des Einsatzfahrzeuges (300),
- ermitteln (43) einer Bewegungstrajektorie (321) für das Einsatzfahrzeug (300), basierend auf dem lokalisierten Aufenthaltsort (320) des Einsatzfahrzeuges (300) und den ermittelten Bewegungstrajektorien (231) der Verkehrsteilnehmer (230),
- antizipieren (44), ob für eine aktuelle Bewegungstrajektorie (101) des Kraftfahrzeuges (100), basierend auf der ermittelten Bewegungstrajektorie (321) für das Einsatzfahrzeug (300), eine Kollision des Kraftfahrzeuges (100) mit dem Einsatzfahrzeug (300) eintreten wird, und
- falls das Antizipieren (44) ergibt, dass die Kollision eintreten wird:
- Ausgeben (45) eines entsprechenden Warnhinweises an einen Nutzer des Kraftfahrzeuges (100).

2. Das Verfahren gemäß Anspruch 1, wobei
die jeweils ermittelte entsprechende Bewegungstrajektorie (231) für den jeweils entsprechenden Verkehrsteilnehmer (230) der jeweils entsprechenden wahrscheinlichsten Bewegungstrajektorie für diesen entsprechenden Verkehrsteilnehmer (230) entspricht.

3. Das Verfahren gemäß Anspruch 1 oder 2, wobei
der lokalisierte Aufenthaltsort (320) des Einsatzfahrzeuges (300) dem wahrscheinlichsten Aufenthaltsort des Einsatzfahrzeuges(300) entspricht, und
die ermittelte Bewegungstrajektorie (321) für das Einsatzfahrzeug (300) der wahrscheinlichsten Bewegungstrajektorie des Einsatzfahrzeuges (300) entspricht.

4. Das Verfahren gemäß irgendeinem der vorhergehenden Ansprüche, das Verfahren ferner aufweisend:
- Ermitteln (46) einer kollisionsfreien Bewegungstrajektorie (102) des Kraftfahrzeuges (100), in dem Fall, dass das Antizipieren (44) ergibt, dass die Kollision eintreten wird.

5. Das Verfahren gemäß Anspruch 4, das Verfahren ferner aufweisend:
- automatisches Übernehmen und Umsetzen (47) der kollisionsfreien Bewegungstrajektorie (102) durch das Kraftfahrzeug (100).

6. Das Verfahren gemäß irgendeinem der vorhergehenden Ansprüche, wobei
das Kraftfahrzeug (100) ein hochautomatisiert betreibbares Kraftfahrzeug und/oder ein autonom betreibbares Kraftfahrzeug ist.

7. Das Verfahren gemäß irgendeinem der vorhergehenden Ansprüche 4 bis 6, wobei
die Umgebung (200) entlang der aktuellen Bewegungstrajektorie (101) des Kraftfahrzeuges (100) verläuft, und
die weitere Umgebung (210) eine Fläche aufweist, welche sich von einer Fläche der Umgebung (200) unterscheidet, und/oder
die Fläche der weiteren Umgebung (210) größer ist, als die Fläche der Umgebung (200).

8. Ein System (400) zur Kollisionsvermeidung eines Kraftfahrzeuges (100) mit einem Einsatzfahrzeug (300), das Kraftfahrzeug (100) aufweisend:
- Eine optische Erfassungsvorrichtung (110), zum optischen Erfassen (10) einer Umgebung (200) des Kraftfahrzeuges (100),
- eine akustische Erfassungsvorrichtung (120), zum akustischen Erfassen (20) einer weiteren Umgebung (210) des Kraftfahrzeuges (100), wobei die weitere Umgebung (210) die Umgebung (200) aufweist und räumlich in ihrer Ausdehnung über eine räumliche Ausdehnung der Umgebung (200) hinausgeht, und
- eine Ausgabevorrichtung (130), zum Ausgeben (45) eines Warnhinweises an einen Nutzer des Kraftfahrzeuges (100),
und das System (400) aufweisend:
- Ein erstes Ermittlungsmittel (410) zum Ermitteln (30) von Verkehrsteilnehmern (230) der Umgebung (200),
- ein Untersuchungsmittel (420), zum Untersuchen (40) der weiteren Umgebung (210) auf ein Signal (310), wobei das Signal (310) indikativ ist, für ein Einsatzsignal eines Einsatzfahrzeuges (300),
- ein zweites Ermittlungsmittel (430), zum Ermitteln (50) einer Bewegungstrajektorie (231) für jeden ermittelten Verkehrsteilnehmer (230),
- ein weiteres Untersuchungsmittel (440), zum Untersuchen (41) der ermittelten Bewegungstrajektorien (231) auf ein Schwarmverhalten, wobei das Schwarmverhalten indikativ ist, für eine Gefahrsituation in der Umgebung (200),
- ein Lokalisierungsmittel (450), zum Lokalisieren (42) eines Aufenthaltsortes (320) des Einsatzfahrzeuges (300),
- ein drittes Ermittlungsmittel (460), zum Ermitteln (43) einer Bewegungstrajektorie (321) für das Einsatzfahrzeug (300), basierend auf dem lokalisierten Aufenthaltsort (320) des Einsatzfahrzeuges (300) und den ermittelten Bewegungstrajektorien (231) der Verkehrsteilnehmer (230), und
- ein Antizipierungsmittel (470), zum Antizipieren (44), ob für eine aktuelle Bewegungstrajektorie (101) des Kraftfahrzeuges (100), basierend auf der ermittelten Bewegungstrajektorie (321) für das Einsatzfahrzeug (300), eine Kollision des Kraftfahrzeuges (100) mit dem Einsatzfahrzeug (300) eintreten wird, und wobei
das System (400) dazu eingerichtet ist, ein Verfahren gemäß irgendeinem der vorhergehenden Ansprüche auszuführen.

9. Das System (400) gemäß Anspruch 8, das System ferner aufweisend:
- Ein viertes Ermittlungsmittel (480), zum Ermitteln (46) einer kollisionsfreien Bewegungstrajektorie (102) des Kraftfahrzeuges (100), und
- eine Kollisionsausweichvorrichtung (490), zum automatischen Übernehmen und Umsetzen (47) der kollisionsfreien Bewegungstrajektorie (102) durch das Kraftfahrzeug (100).

10. Ein Kraftfahrzeug (100), aufweisend:
- Eine optische Erfassungsvorrichtung (110), zum optischen Erfassen (10) einer Umgebung (200) des Kraftfahrzeuges (100),
- eine akustische Erfassungsvorrichtung (120), zum akustischen Erfassen (20) einer weiteren Umgebung (210) des Kraftfahrzeuges (100), wobei die weitere Umgebung (210) die Umgebung (200) aufweist und räumlich in ihrer Ausdehnung über eine räumliche Ausdehnung der Umgebung (200) hinausgeht,
- eine Ausgabevorrichtung (130), zum Ausgeben eines Warnhinweises an einen Nutzer des Kraftfahrzeuges (100), und
- ein System (400) gemäß Anspruch 8 oder 9, wobei das System (400) dazu eingerichtet ist, ein Verfahren gemäß irgendeinem der vorhergehenden Ansprüche 1 bis 7 auszuführen.

11. Ein Computerprogrammprodukt für ein System (400) gemäß Anspruch 8 oder 9 und/oder für ein Kraftfahrzeug (100) gemäß Anspruch 10, wobei
das System (400) und/oder das Kraftfahrzeug (100) jeweils nach einem Verfahren gemäß irgendeinem der Ansprüche 1 bis 7 betreibbar ist.

12. Ein Datenträger aufweisend ein Computerprogrammprodukt gemäß Anspruch 11.

## Claims

1. Method for collision avoidance of a motor vehicle (100) with an emergency vehicle (300), the method including:
- optically detecting (10) the surroundings (200) of the motor vehicle (100) by means of an optical detection arrangement (110) of the motor vehicle (100),
- acoustically detecting (20) the wider surroundings (210) of the motor vehicle (100) by means of an acoustic detection arrangement (120) of the motor vehicle (100), wherein the wider surroundings (210) include the surroundings (200) and go spatially beyond a spatial extent of the surroundings (200) in terms their extent,
- determining (30) traffic users (230) in the surroundings (200),
- investigating (40) the wider surroundings (210) for a signal (310), wherein the signal (310) is indicative of an emergency signal of an emergency vehicle (300),
- determining (50) a trajectory of motion (231) for each traffic user (230) determined, and
- if the investigation (40) of the wider surroundings (210) detects a corresponding emergency signal:
- investigating (41) the determined trajectories of motion (231) for a swarming behaviour, wherein the swarming behaviour is indicative of a hazardous situation in the surroundings (200), and
- if the investigation (41) of the determined trajectories of motion (231) determines a corresponding hazardous situation in the surroundings (200):
- locating (42) a position (320) of the emergency vehicle (300),
- determining (43) a trajectory of motion (321) for the emergency vehicle (300) based on the located position (320) of the emergency vehicle (300) and the determined trajectories of motion (231) of the traffic users (230),
- anticipating (44) whether a collision of the motor vehicle (100) with the emergency vehicle (300) will occur for a current trajectory of motion (101) of the motor vehicle (100) and based on the determined trajectory of motion (321) for the emergency vehicle (300), and
- if the anticipation (44) gives the result that the collision will occur:
- outputting (45) a corresponding warning to a user of the motor vehicle (100).

2. Method according to Claim 1, wherein
the respective determined corresponding trajectory of motion (231) for the respective corresponding traffic user (230) corresponds to the respective corresponding most likely trajectory of motion for said corresponding traffic user (230).

3. Method according to Claim 1 or 2, wherein
the located position (320) of the emergency vehicle (300) corresponds to the most likely position of the emergency vehicle (300) and
the determined trajectory of motion (321) for the emergency vehicle (300) corresponds to the most likely trajectory of motion of the emergency vehicle (300).

4. Method according to any one of the preceding claims, the method further including:
- determining (46) a collision-free trajectory of motion (102) of the motor vehicle (100) in the case in which the anticipation (44) gives the result that the collision will occur.

5. Method according to Claim 4, the method further including:
- automatically applying and implementing (47) the collision-free trajectory of motion (102) by the motor vehicle (100).

6. Method according to any one of the preceding claims, wherein
the motor vehicle (100) is a motor vehicle that is operable in a highly automated manner and/or is an autonomously operable motor vehicle.

7. Method according to any one of preceding Claims 4 to 6, wherein
the surroundings (200) move along the current trajectory of motion (101) of the motor vehicle (100), and
the wider surroundings (210) include an area that is different from an area of the surroundings (200), and/or the area of the wider surroundings (210) is larger than the area of the surroundings (200).

8. System (400) for collision avoidance of a motor vehicle (100) with an emergency vehicle (300), the motor vehicle (100) comprising:
- an optical detection arrangement (110) for the optical detection (10) of the surroundings (200) of the motor vehicle (100),
- an acoustic detection arrangement (120) for the acoustic detection (20) of the wider surroundings (210) of the motor vehicle (100), wherein the wider surroundings (210) include the surroundings (200) and go spatially beyond a spatial extent of the surroundings (200) in terms their extent, and
- an output arrangement (130) for outputting (45) a warning to a user of the motor vehicle (100),
and the system (400) comprising:
- a first means of determination (410) for determining (30) traffic users (230) in the surroundings (200),
- a means of investigation (420) for investigating (40) the wider surroundings (210) for a signal (310), wherein the signal (310) is indicative of an emergency signal of an emergency vehicle (300),
- a second means of determination (430) for determining (50) a trajectory of motion (231) for each traffic user (230) determined,
- a further means of investigation (440) for investigating (41) the determined trajectories of motion (231) for a swarming behaviour, wherein the swarming behaviour is indicative of a hazardous situation in the surroundings (200),
- a means of location (450) for locating (42) a position (320) of the emergency vehicle (300),
- a third means of determination (460) for determining (43) a trajectory of motion (321) for the emergency vehicle (300) based on the located position (320) of the emergency vehicle (300) and the determined trajectories of motion (231) of the traffic users (230), and
- a means of anticipation (470) for anticipating (44) whether a collision of the motor vehicle (100) with the emergency vehicle (300) will occur for a current trajectory of motion (101) of the motor vehicle (100) and based on the determined trajectory of motion (321) for the emergency vehicle (300), and wherein
the system (400) is arranged to carry out a method according to any one of the preceding claims.

9. System (400) according to Claim 8, the system further comprising:
- a fourth means of determination (480) for determining (46) a collision-free trajectory of motion (102) of the motor vehicle (100), and
- a collision avoidance arrangement (490) for automatically applying and implementing (47) the collision-free trajectory of motion (102) by the motor vehicle (100).

10. Motor vehicle (100), comprising:
- an optical detection arrangement (110) for the optical detection (10) of the surroundings (200) of the motor vehicle (100),
- an acoustic detection arrangement (120) for the acoustic detection (20) of the wider surroundings (210) of the motor vehicle (100), wherein the wider surroundings (210) include the surroundings (200) and go spatially beyond a spatial extent of the surroundings (200) in terms their extent,
- an output arrangement (130) for outputting a warning to a user of the motor vehicle (100), and
- a system (400) according to Claim 8 or 9, wherein the system (400) is arranged to carry out a method according to any one of preceding Claims 1 to 7.

11. Computer program product for a system (400) according to Claim 8 or 9 and/or for a motor vehicle (100) according to Claim 10, wherein
the system (400) and/or the motor vehicle (100) respectively can be operated according to a method according to any one of Claims 1 to 7.

12. Data medium comprising a computer program product according to Claim 11.

## Revendications

1. Procédé permettant d'éviter une collision entre un véhicule automobile (100) et un véhicule d'intervention (300), le procédé présentant les étapes consistant à :
- détecter optiquement (10) un environnement (200) du véhicule automobile (100) au moyen d'un dispositif de détection optique (110) du véhicule automobile (100),
- détecter acoustiquement (20) un autre environnement (210) du véhicule automobile (100) au moyen d'un dispositif de détection acoustique (120) du véhicule automobile (100), l'autre environnement (210) présentant l'environnement (200) et son étendue allant spatialement au-delà d'une étendue spatiale de l'environnement (200),
- déterminer (30) des usagers de la route (230) de l'environnement (200),
- rechercher (40) dans l'autre environnement (210) un signal (310), le signal (310) indiquant un signal d'intervention d'un véhicule d'intervention (300),
- déterminer (50) une trajectoire de déplacement (231) pour chaque usager de la route (230) déterminé, et
- si la recherche (40) dans l'autre environnement (210) détermine un signal d'intervention correspondant :
- rechercher (41) dans les trajectoires de déplacement (231) déterminées un mouvement en nuée, le mouvement en nuée indiquant une situation dangereuse dans l'environnement (200), et
- si la recherche (41) dans les trajectoires de déplacement (231) déterminées détermine une situation dangereuse correspondante dans l'environnement (200) :
- localiser (42) un emplacement (320) du véhicule d'intervention (300),
- déterminer (43) une trajectoire de déplacement (321) pour le véhicule d'intervention (300) sur la base de l'emplacement localisé (320) du véhicule d'intervention (300) et des trajectoires de déplacement (231) déterminées des usagers de la route (230),
- anticiper (44) si pour une trajectoire de déplacement (101) actuelle du véhicule automobile (100), sur la base de la trajectoire de déplacement (321) déterminée pour le véhicule d'intervention (300), une collision entre le véhicule automobile (100) et le véhicule d'intervention (300) va se produire, et
- si le résultat de l'anticipation (44) fait apparaître que la collision va se produire :
- sortir (45) un avertissement correspondant à destination d'un utilisateur du véhicule automobile (100).

2. Procédé selon la revendication 1, dans lequel la trajectoire de déplacement correspondante (231), respectivement déterminée pour l'usager de la route (230) respectivement correspondant correspond à la trajectoire de déplacement correspondante respectivement la plus vraisemblable pour cet usager de la route (230) correspondant.

3. Procédé selon la revendication 1 ou 2, dans lequel l'emplacement localisé (320) du véhicule d'intervention (300) correspond à l'emplacement le plus vraisemblable du véhicule d'intervention (300), et
la trajectoire de déplacement (321) déterminée pour le véhicule d'intervention (300) correspond à la trajectoire de déplacement la plus vraisemblable du véhicule d'intervention (300).

4. Procédé selon l'une quelconque des revendications précédentes, le procédé présentant en outre l'étape consistant à :
- déterminer (46) une trajectoire de déplacement (102) sans collision du véhicule automobile (100) au cas où l'anticipation (44) fait apparaître que la collision va se produire.

5. Procédé selon la revendication 4, le procédé présentant en outre l'étape consistant à :
- adopter et appliquer automatiquement (47) la trajectoire de déplacement sans collision (102) par le véhicule automobile (100).

6. Procédé selon l'une quelconque des revendications précédentes, dans lequel le véhicule automobile (100) est un véhicule automobile pouvant fonctionner de manière hautement automatisée et/ou un véhicule automobile pouvant fonctionner de manière autonome.

7. Procédé selon l'une quelconque des revendications précédentes 4 à 6, dans lequel
l'environnement (200) s'étend le long de la trajectoire de déplacement actuelle (101) du véhicule automobile (100), et
l'autre environnement (210) présente une superficie qui est différente d'une superficie de l'environnement (200), et/ou
la superficie de l'autre environnement (210) est plus grande que la superficie de l'environnement (200).

8. Système (400) permettant d'éviter une collision entre un véhicule automobile (100) et un véhicule d'intervention (300), le véhicule automobile (100) présentant :
- un dispositif de détection optique (110) pour détecter optiquement (10) un environnement (200) du véhicule automobile (100),
- un dispositif de détection acoustique (120) pour détecter acoustiquement (20) un autre environnement (210) du véhicule automobile (100), l'autre environnement (210) présentant l'environnement (200) et son étendue allant spatialement au-delà d'une étendue spatiale de l'environnement (200), et
- un dispositif de sortie (130) pour sortir (45) un avertissement à destination d'un utilisateur du véhicule automobile (100),
et le système (400) présentant :
- un premier moyen de détermination (410) pour déterminer (30) des usagers de la route (230) de l'environnement (200),
- un moyen de recherche (420) pour rechercher (40) dans l'autre environnement (210) un signal (310), le signal (310) indiquant un signal d'intervention d'un véhicule d'intervention (300),
- un deuxième moyen de détermination (430) pour déterminer (50) une trajectoire de déplacement (231) pour chaque usager de la route déterminé (230),
- un autre moyen de recherche (440) pour rechercher (41) dans les trajectoires de déplacement déterminées (231) un mouvement en nuée, le mouvement en nuée indiquant une situation dangereuse dans l'environnement (200),
- un moyen de localisation (450) pour localiser (42) un emplacement (320) du véhicule d'intervention (300),
- un troisième moyen de détermination (460) pour déterminer (43) une trajectoire de déplacement (321) pour le véhicule d'intervention (300) sur la base de l'emplacement localisé (320) du véhicule d'intervention (300) et des trajectoires de déplacement (231) déterminées des usagers de la route (230), et
- un moyen d'anticipation (470) pour anticiper (44) si pour une trajectoire de déplacement (101) actuelle du véhicule automobile (100), sur la base de la trajectoire de déplacement (321) déterminée pour le véhicule d'intervention (300), une collision du véhicule automobile (100) avec le véhicule d'intervention (300) va se produire, et dans lequel
le système (400) est aménagé pour exécuter un procédé selon l'une quelconque des revendications précédentes.

9. Système (400) selon la revendication 8, le système présentant en outre :
- un quatrième moyen de détermination (480) pour déterminer (46) une trajectoire de déplacement sans collision (102) du véhicule automobile (100), et
- un dispositif d'évitement de collision (490) pour adopter et appliquer automatiquement (47) la trajectoire de déplacement sans collision (102) par le véhicule automobile (100).

10. Véhicule automobile (100), présentant :
- un dispositif de détection optique (110) pour détecter optiquement (10) un environnement (200) du véhicule automobile (100),
- un dispositif de détection acoustique (120) pour détecter acoustiquement (20) un autre environnement (210) du véhicule automobile (100), l'autre environnement (210) présentant l'environnement (200) et son étendue allant spatialement au-delà d'une étendue spatiale de l'environnement (200),
- un dispositif de sortie (130) pour sortir un avertissement à destination d'un utilisateur du véhicule automobile (100), et
- un système (400) selon la revendication 8 ou 9, le système (400) étant aménagé pour exécuter un procédé selon l'une quelconque des revendications précédentes 1 à 7.

11. Produit de programme informatique pour un système (400) selon la revendication 8 ou 9 et/ou pour un véhicule automobile (100) selon la revendication 10, le système (400) et/ou le véhicule automobile (100) pouvant fonctionner respectivement selon un procédé selon l'une quelconque des revendications 1 à 7.

12. Support de données, présentant un produit de programme informatique selon la revendication 11.
